# EUROPEAN PATENT SPECIFICATION

(11) **EP 2 014 499 B1**
(45) Date of publication and mention of the grant of the patent: **07.07.2010**
(21) Application number: 07425428.5
(22) Date of filing: 10.07.2007
(51) Int. Cl.: B60K 6/547, B60W 10/10, B60W 10/02, F16H 3/08

(54) **Hybrid vehicle power transmission**
Kraftübersetzungsanordnung eines Hybridfahrzeuges
Transmission de puissance dans un véhicule hybride

(43) Date of publication of application: 14.01.2009
(73) Proprietor: Magneti Marelli S.p.A., Corbetta (MI) (IT)
(72) Inventor: Medico, Giuseppe, 10098 Rivoli (IT); Palazzetti, Andrea, 10051 Avigliana (IT); Amisano, Fabrizio, 10144 Torino (IT)
(74) Representative: Jorio, Paolo

(56) References cited:
- DE-A1- 10 203 514
- FR-A- 2 822 758
- US-A1- 2002 040 818
- US-A1- 2003 104 901

## Description

### TECHNICAL FIELD

The present invention relates to an automotive servo-assisted transmission.

### BACKGROUND ART

Servo-assisted transmissions, which are structurally similar to a manual transmission of the traditional type except for the fact that the clutch pedal and the gear selection lever operatable by the driver are replaced by corresponding electric or hydraulic servo-controls, are increasingly widespread. When using a servo-assisted transmission, the driver only needs to send the order to shift up or down to a transmission control unit and the transmission control unit autonomously shifts gear by operating both on the engine and on the servo-controls associated to clutch and gearbox.

In a servo-assisted transmission, the clutch which disconnects the primary gearbox shaft from the crankshaft must be maintained open during the disengagement of the current gear and the engagement of the next gear; consequently, a servo-assisted transmission inevitably presents an interruption of torque transmission from the engine to the drive wheels (i.e. a "torque gap") during a gear shift. In order to perform a gear shift, the modern servo-assisted transmissions currently on the market generally require a time between 250 and 600 ms (the time actually employed depends both on the dynamic performances of the gearbox components, and on the required degree of comfort); consequently, the torque gap to the drive wheels caused by a g*ear shift is clearly perceived by the vehicle occupants, because it causes a discontinuity in the longitudinal vehicle acceleration and thus causes a pitching oscillation.

It is important to note that the torque gap to the drive wheels caused by a gear shift is clearly perceivable for the vehicle occupants when the vehicle is accelerating, i.e. while shifting up (shifting from a lower gear to a higher gear) or while shifting down and accelerating (shifting from a higher gear to a lower gear, similar to the kick-down of a traditional automatic transmission), because during vehicle acceleration the engine is driving to accelerate the vehicle itself. Instead, when the engine is slowing down, i.e. while shifting gears in deceleration (shifting from a higher gear to a lower gear), the torque gap to the drive wheels caused by a gear shift is not normally perceived by the vehicle occupants, because the vehicle deceleration is essentially performed by the braking system and the engine does not have an essential role in vehicle dynamics.

Furthermore, while shifting up and the accelerator position being equal, the torque gap to the drive wheels caused by a gear shift has a greater effect on the vehicle occupants in low gears (shifting from the first gear to the second gear and from the second gear to the third gear), whereas it has a milder effect on the vehicle occupants in high gears (shifting from the third gear to the fourth gear and higher) because in low gears the instantaneous longitudinal acceleration of the vehicle is higher.

Various surveys carried out among car drivers have shown that the torque gap to the drive wheels caused by a gear shift is acceptable when the servo-assisted gearbox is manually driven, i.e. when the servo-assisted gearbox is considered as a replacement for a manual gearbox of the traditional type in which the torque gap at the drive wheels is normal and inevitable. Instead, the torque gap to the drive wheels caused by a gear shift is not accepted when the servo-assisted gearbox is driven in an automatic mode, i.e. when the servo-assisted gearbox is considered as a replacement for a torque converter automatic gearbox in which the torque gap to the drive wheels is absent. Consequently, a servo-assisted gearbox cannot be used as natural substitute of a torque converter automatic gearbox, despite the fact that the servo-assisted gearbox is considerably more efficient.

In order to eliminate or at least reduce the torque gap during gear shifts, it has been suggested to use an electric motor, which is keyed onto the secondary shaft of the gearbox and is driven so as to replace the internal combustion engine when the servo-assisted clutch remains open; in other words, when the servo-assisted clutch is open, the electric motor uses energy from a battery to generate a torque equivalent to the torque generated by the internal combustion engine. However, in this configuration, the electric motor cannot perform some functions (typically, it cannot work as a starter motor for the internal combustion engine), and is in an unfavorable condition to perform other functions (e.g. booster to obtain a supplementary torque).

US2002040818A1 discloses a power transmission mechanism according to the preamble of claim 1 which is capable of employing one electric motor as a drive source for driving drive wheels and as a drive source for cranking an engine, thereby making it possible to reduce manufacturing costs of the hybrid vehicle, and preventing the motor from offering an extra rotational resistance to the engine when the drive wheels are being driven by the engine, thereby making it possible to enhance fuel economy.

### DISCLOSURE OF INVENTION

The object of the present invention is an automotive servo-assisted transmission which is free from the above-described drawbacks and which is easy and cost-effective to make.

This object is achieved by the special features of claim 1.

### BRIEF DESCRIPTION OF THE DRAWINGS

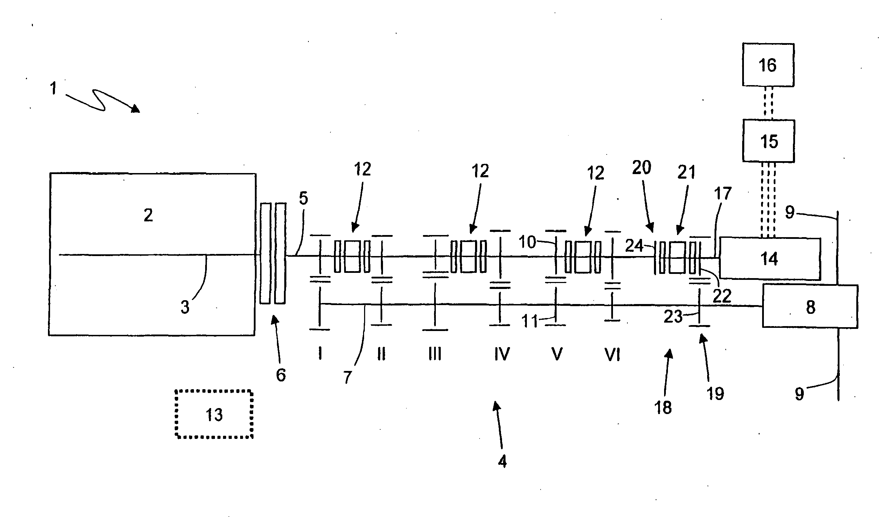

The present invention will now be described with reference to the accompanying drawing, which shows a non-limitative embodiment thereof; specifically, the accompanying figure is a diagrammatic view of a automotive servo-assisted transmission made according to the present invention.

### EMBODIMENTS OF THE INVENTION

In the accompanying figure, numeral 1 indicates as a whole a servo-assisted transmission for a car propelled by an internal combustion engine 2, which is provided with a crankshaft 3 which rotates at an angular speed ωₘ.

The servo-assisted transmission 1 comprises a servo-assisted mechanical gearbox 4, which is provided with a primary shaft 5 which rotates at an angular speed ω₁ and is connectable to the crankshaft 3 by means of a servo-assisted clutch 6 and with a secondary shaft 7 which rotates at an angular speed ω₂ and is connected to a differential 8 which transmits the motion to the drive wheels by means of two axle shafts 9.

The servo-assisted gearbox 4 shown in the accompanying figure comprises six forward gears indicated by Roman numerals (first gear I, second gear II, third gear III, fourth gear IV, fifth gear V and sixth gear VI). The primary shaft 5 and the secondary shaft 7 are reciprocally and mechanically coupled by means of a plurality of gear pairs, each of which defines a corresponding gear and a comprises a primary gear 10 mounted on the primary shaft 5 and a secondary gear 11 mounted on the secondary shaft 7.

Each primary gear 10 is idly mounted on the primary shaft 5 and constantly meshes with the corresponding secondary gear 11; instead, each secondary gear 11 is keyed to the secondary shaft 7 to integrally rotate with the secondary shaft 7 itself. Furthermore, the servo-assisted mechanical gearbox 4 comprises three synchronizers 12, each of which is mounted coaxially to the primary shaft 5, it is arranged between two primary gears 10, and is adapted to be actuated to alternatively engage the two primary gears 10 of the primary shaft 5 (i.e. to alternatively make the two primary gears 10 angularly integral with the primary shaft 5). In other words, each synchronizer 12 may be displaced in one direction to engage a primary gear 10 onto the primary shaft 5, or may be displaced in the other direction to engage the other primary gear 10 onto the primary shaft 5.

The servo-assisted mechanical gearbox 4 is actuated by a hydraulic servo-control to drive the synchronizers 12 so as to engage and disengage the gears; the servo-assisted clutch 6 is also actuated by a hydraulic servo-control to connect and disconnect the crankshaft 3 to and from the primary shaft 5. The servo-assisted transmission 1 comprises an electronic control unit 13 (diagrammatically shown), which drives the hydraulic servo-controls of the servo-assisted mechanical gearbox 4 and the servo-assisted clutch 6.

According to a different embodiment (not shown and perfectly equivalent to the above-described embodiment), the primary gears 10 are keyed onto the primary shaft 5, the secondary gears 11 are idly mounted on the secondary shaft 7 and the synchronizers 12 are mounted on the secondary shaft 7 for engaging the secondary gears 11 on the secondary shaft 7 itself.

Furthermore, the servo-assisted transmission 1 comprises a reversible electric machine 14 (i.e. which may operate both as a motor using electric current and generating mechanical work, and as a generator using mechanical work and generating electric energy) driven by an electric actuator 15 connected to at least one battery 16 adapted to store electric energy.

The reversible electric machine 14 comprises a shaft 17, which is integral to a rotor of the reversible electric machine 14, is normally idle (i.e. mechanically connected in a permanent manner neither to the primary shaft 5, nor to the secondary shaft 7), and is mechanically connectable to the primary shaft.

The servo-assisted transmission 1 comprises a connection device 18 adapted either to connect the shaft 17 of the reversible electric machine 14 to the primary shaft 5 of the servo-assisted mechanical gearbox 4, or to connect the shaft 17 of the reversible electric machine 14 to the secondary shaft 7 of the servo-assisted mechanical gearbox 4, or to maintain the shaft 17 of the reversible electric machine 14 idle (i.e. connected neither to the primary shaft 5, nor to the secondary shaft 7).

According to the preferred embodiment shown in the accompanying figures, the connection device 18 comprises a gear transmission 19 arranged between the shaft 17 of the reversible electric machine 14 and the secondary shaft 7 of the servo-assisted mechanical gearbox 4, one direct drive transmission 20 arranged between the shaft 17 of the reversible electric machine 14 and the primary shaft 5, and a synchronizer 21 adapted to alternatively engage either the gear transmission 19 or the direct drive transmission 20.

The gear transmission 19 preferably presents a non-unitary transmission ratio and comprises a gear 22 idly mounted on the shaft 17 of the reversible electric machine 14 and a gear 23 which is keyed onto the secondary shaft 7 and permanently meshes with the gear 22; the synchronizer 21 is adapted to engage the gear 22 of the shaft 17 of the reversible electric machine 14 to connect the shaft 17 of the reversible electric machine 14 to the secondary shaft 7. The value of the non-unitary transmission ratio value of the gear transmission 19 is such so as to optimize the revolutions per minute and torque values of the reversible electric machine 14 with respect to the revolutions per minute and the torque transmitted by the secondary shaft 7; normally, the gear transmission 19 contemplates a reduction of revolutions per minute, i.e. the reversible electric machine 14 turns slower than the secondary shaft 7.

The direct drive transmission 20 presents a unitary transmission ratio and comprises a connection element 24 keyed onto the primary shaft 5; the synchronizer 21 is adapted to engage the connection element 24 onto the shaft 17 of the reversible electric machine 14 to connect the shaft 17 of the reversible electric machine 14 to the primary shaft 5.

According to a different embodiment (not shown), the direct drive transmission 20 is replaced by a further gear transmission, which is arranged between the shaft 17 of the reversible electric machine 14 and the primary shaft 5, presents a non-unitary transmission ratio and is entirely similar to the gear transmission 19. Also in this case, the non-unitary transmission ratio value of the further gear transmission is such as to optimize the revolutions per minute and torque values of the reversible electric machine 14 with respect to the revolutions per minute and the torque transmitted by the primary shaft 5; normally, the further gear transmission contemplates a reduction of revolutions per minute, i.e. the reversible electric machine 14 turns slower than the primary shaft 5.

The operation of the servo-assisted transmission 1 is described below.

When a gear shift is not in progress and the car is traveling (i.e. the internal combustion engine 2 is on and the servo-assisted clutch 6 closed) the shaft 17 of the reversible electric machine 14 is normally connected to the primary shaft 5 and the reversible electric machine 14 works as a generator of electric energy to supply the electric energy required by the electric loads of the car. If the car slows down, the reversible electric machine 14 may maximize (compatibly with the charge state of the battery 16 and the car dynamics) the input of mechanical energy to make a regenerative braking of the car. In case of a fast acceleration, the reversible electric machine 14 may work as an electric motor, using electric energy from the battery 16 to supply a supplementary torque ("electric boost").

In case of travel at very slow speed, the reversible electric machine 14 may work in a crawling mode (low speed feeding) to avoid excessive wear of the servo-assisted clutch 6. If the car 1 stops uphill, the shaft 17 of the reversible electric machine 14 may be connected to the secondary shaft 7 to allow the reversible electric machine 14 to work as an electromagnetic brake which maintains the car 1 braked.

Finally, when the shaft 17 of the reversible electric machine 14 is connected to the primary shaft, the reversible electric machine 14 may be used as a starter motor to start the internal combustion engine 2.

During a gear shift, the reversible electric machine 14 is always preventively connected to the secondary shaft 7 (i.e. it is connected to the secondary shaft 7 immediately before shifting gear) and is driven so as to replace the internal combustion engine 2 when the servo-assisted clutch 6 remains open. Consequently, the reversible electric machine 14 may work as an electric motor by using electric current from the battery 16 to generate a torque equivalent to the torque generated by the internal combustion engine 2 (car accelerating with the internal combustion engine 2 driving - shifting up), or may work as an electric generator to apply to the secondary shaft 7 a braking torque equivalent to the exhaust brake of the internal combustion engine 2 (car decelerating with the internal combustion engine 2 not driving - shifting down).

It is important to note that when the servo-assisted clutch is open, the reversible electric machine 14 is requested to generate/use a mechanical torque which depends on the desired law of motion of the car, such a desired law of motion normally contemplating the absence of relevant discontinuity in accelerations/decelerations.

As previously mentioned, the connection device 18 is further adapted to maintain the shaft 17 of the reversible electric machine 14 idle (i.e. connected neither to the primary shaft 5, nor to the secondary shaft 7); such a configuration is used when the reversible electric machine 14 needs to be used neither as a motor, nor as a generator (e.g. car traveling and battery 16 fully charged) and it is desirable to avoid feeding the shaft 17 of the reversible electric machine 14 (the idle rotation of the shaft 17 of the reversible electric machine 14 implies loss of mechanical energy due to friction and ventilation). Furthermore, the reversible electric machine 14 is necessarily maintained idle (i.e. connected to neither the primary shaft 5, nor the secondary shaft 7) when the revolutions per minute of the primary shaft 5 and of the secondary shaft 7 are not compatible with the maximum rotation speed of the shaft 17 of the reversible electric machine 14; in this manner, the mechanical dimensioning of the reversible electric machine 14 is simplified, because the reversible electric machine 14 does not necessarily need to work (or at least does not need to work for long periods) at all possible revolutions per minute of the primary shaft 5 and of the secondary shaft 7.

According to a different embodiment (not shown) the connection device 18 comprises a pair of clutches, which replace the synchronizer 1 and which are arranged between the shaft 17 of the reversible electric machine 14 and the primary shaft 5 and the secondary shaft 7 respectively.

The above-described servo-assisted transmission 1 presents many advantages, because it is structurally very similar to a standard servo-assisted transmission 1 and thus simple and cost-effective to make starting from an existing servo-assisted transmission 1. The above-described servo-assisted transmission 1 presents the high efficiency typical of mechanical gearbox and thus much higher than automatic torque converter gearboxes. The above-described servo-assisted transmission 1 does not present any torque gap to the drive wheels during gear shifts. Furthermore, owing to the possibility of connecting the reversible electric machine 14 both to the primary shaft 5, and to the secondary shaft 7, the reversible electric machine 14 itself may perform many functions (car alternator, starter motor of the internal combustion engine 2, booster for obtaining a supplementary torque, regenerative braking) always in the most favorable conditions.

## Claims

1. An automotive servo-assisted transmission (1) comprising:
a servo-assisted mechanical gearbox (4), which is provided with a primary shaft (5) connectable to a crankshaft (3) of an internal combustion engine (2) and with a secondary shaft (7);
a servo-assisted clutch (6) for connecting the primary shaft (5) of the servo-assisted mechanical gearbox (4) to the crankshaft (3) of the internal combustion engine (2); and
a reversible electric machine (14) provided with a shaft (17) thereof; and
a connection device (18) adapted either to connect the shaft (17) of the reversible electric machine (14) to the primary shaft (5) or to connect the shaft (17) of the reversible electric machine (14) to the secondary shaft (7) and also adapted to maintain the shaft (17) of the reversible electric machine (14) idle and isolated both from the primary shaft (5) and from the secondary shaft (7);
the servo-assisted transmission (1) is **characterized in that** the connection device (18) maintains the reversible electric machine (14) idle and isolated both from the primary shaft (5) and from the secondary shaft (7) when the revolutions per minute of the primary shaft (5) and of the secondary shaft (7) are not compatible with the maximum rotation speed of the shaft (17) of the reversible electric machine (14).

2. A servo-assisted transmission (1) according to claim 1, wherein the servo-assisted mechanical gearbox (4) comprises:
a plurality of pairs of gears, each of which defines a corresponding gear and comprises a primary gear (10) mounted on the primary shaft (5) and a secondary gear (11) mounted on the secondary shaft (7) which permanently meshes with the primary gear (10); and
a plurality of first synchronizers (12), each of which is mounted coaxially either to the primary shaft (5) or to the secondary shaft (7) and is adapted to be actuated to engage at least one primary gear (10) onto the primary shaft (5) or at least one secondary gear (11) onto the secondary shaft (7).

3. A servo-assisted transmission (1) according to claim 1 or 2, wherein the connection device (18) connects the shaft (17) of the reversible electric machine (14) to the primary shaft (5) in direct drive.

4. A servo-assisted transmission (1) according to claim 1 or 2, wherein the connection device (18) connects the shaft (17) of the reversible electric machine (14) to the primary shaft (5) with a non-unitary transmission ratio by means of at least one pair of gears.

5. A servo-assisted transmission (1) according to one of claims from 1 to 4, wherein the connection device (18) connects the shaft (17) of the reversible electric machine (14) to the secondary shaft (7) with a non-unitary transmission ratio by means of at least one pair of gears (22, 23).

6. A servo-assisted transmission (1) according to one of claims from 1 to 5, wherein the connection device (18) comprises a second synchronizer (21).

7. A servo-assisted transmission (1) according to claim 6, wherein the connection device (18) comprises a gear transmission (19) arranged between the shaft (17) of the reversible electric machine (14) and the secondary shaft (7).

8. A servo-assisted transmission (1) according to claim 7, wherein the gear transmission (19) comprises a first gear (22) idly mounted on the shaft (17) of the reversible electric machine (14) and a second gear (23) which is keyed onto the secondary shaft (7) and permanently meshes with the first gear (22); the second synchronizer (21) is adapted to engage the first gear (22) of the shaft (17) of the reversible electric machine (14).

9. A servo-assisted transmission (1) according to claim 6, 7 or 8, wherein the connection device (18) comprises a direct drive transmission (20) arranged between the shaft (17) of the reversible electric machine (14) and the primary shaft (5).

10. A servo-assisted transmission (1) according to claim 9, wherein the direct drive transmission (20) comprises a connection element (24) keyed onto the primary shaft (5); the second synchronizer (21) is adapted to engage the connection element (24) to the shaft (17) of the reversible electric machine (14).

11. A servo-assisted transmission (1) according to claim 6, 7 or 8, wherein the connection device (18) comprises a further gear transmission arranged between the shaft (17) of the reversible electric machine (14) and the primary shaft (5).

12. A servo-assisted transmission (1) according to one of claims from 1 to 5, wherein the connection device (18) comprises a pair of further clutches, which are arranged between the shaft (17) of the reversible electric machine (14) and the primary shaft (5) and the secondary shaft (7) respectively.

## Patentansprüche

1. Kraftfahrzeug-Servogetriebe (1), das umfasst:
ein mechanisches Servoschaltgetriebe (4), das mit einer primären Welle (5), die mit einer Kurbelwelle (3) einer Brennkraftmaschine (2) verbunden werden kann, und mit einer sekundären Welle (7) versehen ist;
eine Servokupplung (6), um die primäre Welle (5) des mechanischen Servoschaltgetriebes (4) mit der Kurbelwelle (3) der Brennkraftmaschine (2) zu verbinden;
eine reversible Elektromaschine (14), die mit einer zugehörigen Welle (17) versehen ist; und
eine Verbindungsvorrichtung (18), die dazu ausgelegt ist, entweder die Welle (17) der reversiblen Elektromaschine (14) mit der primären Welle (5) zu verbinden oder die Welle (17) der reversiblen Elektromaschine (14) mit der sekundären Welle (7) zu verbinden, und außerdem dazu ausgelegt ist, die Welle (17) der reversiblen Elektromaschine (14) im Leerlauf und isoliert sowohl von der primären Welle (5) als auch von der sekundären Welle (7) zu halten;
wobei das Servogetriebe (1) **dadurch gekennzeichnet ist, dass** die Verbindungsvorrichtung (18) die reversible Elektromaschine (14) im Leerlauf und isoliert sowohl von der primären Welle (5) als auch von der sekundären Welle (7) hält, wenn die Umdrehungen pro Minute der primären Welle (5) und der sekundären Welle (7) mit der maximalen Drehzahl der Welle (17) der reversiblen Elektromaschine (14) nicht kompatibel sind.

2. Servogetriebe (1) nach Anspruch 1, wobei das mechanische Servoschaltgetriebe (4) umfasst:
mehrere Paare von Zahnrädern, wovon jedes ein entsprechendes Zahnrad definiert und ein primäres Zahnrad (10), das an der primären Welle (5) montiert ist, und ein sekundäres Zahnrad (11), das an der sekundären Welle (7) montiert ist und mit dem primären Zahnrad (10) permanent kämmt, umfasst; und
mehrere erste Synchronisierer (12), wovon jeder koaxial entweder an der primären Welle (5) oder an der sekundären Welle (7) montiert ist und dazu ausgelegt ist, betätigt zu werden, um wenigstens ein primäres Zahnrad (10) mit der primären Welle (5) oder wenigstens ein sekundäres Zahnrad (11) mit der sekundären Welle (7) in Eingriff zu bringen.

3. Servogetriebe (1) nach Anspruch 1 oder 2, wobei die Verbindungsvorrichtung (18) die Welle (17) der reversiblen Elektromaschine (14) mit der primären Welle (5) direkt antriebsschlüssig verbindet.

4. Servogetriebe (1) nach Anspruch 1 oder 2, wobei die Verbindungsvorrichtung (18) die Welle (17) der reversiblen Elektromaschine (14) mit der primären Welle (5) in einem nicht einheitlichen [engl.: non-unitary] Übersetzungsverhältnis mittels wenigstens eines Paars von Zahnrädern verbindet.

5. Servogetriebe (1) nach einem der Ansprüche 1 bis 4, wobei die Verbindungsvorrichtung (18) die Welle (17) der reversiblen Elektromaschine (14) mit der sekundären Welle (7) mit einem nicht einheitlichen [engl.: non-unitary] Übersetzungsverhältnis mittels wenigstens eines Paars von Zahnrädern (22, 23) verbindet.

6. Servogetriebe (1) nach einem der Ansprüche 1 bis 5, wobei die Verbindungsvorrichtung (18) einen zweiten Synchronisierer (21) umfasst.

7. Servogetriebe (1) nach Anspruch 6, wobei die Verbindungsvorrichtung (18) ein Zahnradgetriebe (19) umfasst, das zwischen der Welle (17) der reversiblen Elektromaschine (14) und der sekundären Welle (7) angeordnet ist.

8. Servogetriebe (1) nach Anspruch 7, wobei das Zahnradgetriebe (19) ein erstes Zahnrad (22), das an der Welle (17) der reversiblen Elektromaschine (14) frei drehbar montiert ist, und ein zweites Zahnrad (23), das auf der sekundären Welle (7) verkeilt ist und ständig mit dem ersten Zahnrad (22) kämmt, umfasst; wobei der zweite Synchronisierer (21) dazu ausgelegt ist, mit dem ersten Zahnrad (22) der ersten Welle (17) der reversiblen Elektromaschine (14) in Eingriff zu gelangen.

9. Servogetriebe (1) nach Anspruch 6, 7 oder 8, wobei die Verbindungsvorrichtung (18) ein Direktschaltgetriebe (20) umfasst, das zwischen der Welle (17) der reversiblen Elektromaschine (14) und der primären Welle (5) angeordnet ist.

10. Servogetriebe (1) nach Anspruch 9, wobei das Direktschaltgetriebe (20) ein auf der primären Welle (5) verkeiltes Verbindungselement (24) umfasst; wobei der zweite Synchronisierer (21) dazu ausgelegt ist, das Verbindungselement (24) mit der Welle (17) der reversiblen Elektromaschine (14) in Eingriff zu bringen.

11. Servogetriebe (1) nach Anspruch 6, 7 oder 8, wobei die Verbindungsvorrichtung (18) ein weiteres Zahnradgetriebe umfasst, das zwischen der Welle (17) der reversiblen Elektromaschine (14) und der primären Welle (5) angeordnet ist.

12. Servogetriebe (1) nach einem der Ansprüche 1 bis 5, wobei die Verbindungsvorrichtung (18) ein Paar weiterer Kupplungen umfasst, die zwischen der Welle (17) der reversiblen Elektromaschine (14) und der primären Welle (5) bzw. der sekundären Welle (7) angeordnet sind.

## Revendications

1. Transmission servo-assistée pour automobile (1) comprenant :
une boîte de vitesse mécanique servo-assistée (4), qui est munie d'un arbre primaire (5) pouvant être relié à un vilebrequin (3) d'un moteur à combustion interne (2) et d'un arbre secondaire (7) ;
un embrayage servo-assisté (6) pour relier l'arbre primaire (5) de la boîte de vitesse mécanique servo-assistée (4) au vilebrequin (3) d'un moteur à combustion interne (2) ; et
une machine électrique réversible (14) munie d'un propre arbre (17) ; et
un dispositif de connexion (18) adapté soit pour relier l'arbre (17) de la machine électrique réversible (14) à l'arbre primaire (5) soit pour connecter l'arbre (17) de la machine électrique réversible (14) à l'arbre secondaire (7) et également adapté pour maintenir l'arbre (17) de la machine électrique réversible (14) à vide et isolé à la fois de l'arbre primaire (5) et de l'arbre secondaire (7) ;
la transmission servo-assistée (1) est **caractérisée en ce que** le dispositif de connexion (18) maintient la machine électrique réversible (14) à vide et isolée à la fois de l'arbre primaire (5) et de l'arbre secondaire (7) quand les tours par minute de l'arbre primaire (5) et de l'arbre secondaire (7) ne sont pas compatibles avec la vitesse de rotation maximale de l'arbre (17) de la machine électrique réversible (14).

2. Transmission servo-assistée (1) selon la revendication 1, dans laquelle la boîte de vitesses mécanique servo-assistée (4) comprend :
une pluralité de paires d'engrenages, chacune desquelles définit une vitesse correspondante et comprend un engrenage primaire (10) monté sur l'arbre primaire (5) et un engrenage secondaire (11) monté sur l'arbre secondaire (7) qui est en prise de manière permanente avec l'engrenage primaire (10) ; et
une pluralité de premiers synchroniseurs (12), chacun desquels est monté de manière coaxiale soit sur l'arbre primaire (5) soit sur l'arbre secondaire (7) et est adapté pour être actionné pour engager au moins un engrenage primaire (10) sur l'arbre primaire (5) ou au moins un engrenage secondaire (11) sur l'arbre secondaire (7).

3. Transmission servo-assistée (1) selon la revendication 1 ou 2, dans laquelle le dispositif de connexion (18) relie l'arbre (17) de la machine électrique réversible (14) à l'arbre primaire (5) en prise directe.

4. Transmission servo-assistée (1) selon la revendication 1 ou 2, dans laquelle le dispositif de connexion (18) relie l'arbre (17) de la machine électrique réversible (14) à l'arbre primaire (5) avec un rapport de transmission non unitaire au moyen d'au moins une paire d'engrenages.

5. Transmission servo-assistée (1) selon l'une quelconque des revendications 1 à 4, dans laquelle le dispositif de connexion (18) relie l'arbre (17) de la machine électrique réversible (14) à l'arbre secondaire (7) avec un rapport de transmission non unitaire au moyen d'au moins une paire d'engrenages (22, 23).

6. Transmission servo-assistée (1) selon l'une quelconque des revendications 1 à 5, dans laquelle le dispositif de connexion (18) comprend un deuxième synchroniseur (21).

7. Transmission servo-assistée (1) selon la revendication 6, dans laquelle le dispositif de connexion (18) comprend une transmission à engrenage (19) agencée entre l'arbre (17) de la machine électrique réversible (14) et l'arbre secondaire (7).

8. Transmission servo-assistée (1) selon la revendication 7, dans laquelle la transmission à engrenage (19) comprend un premier engrenage (22) monté libre sur l'arbre (17) de la machine électrique réversible (14) et un deuxième engrenage (23) qui est calé sur l'arbre secondaire (7) et est en prise de manière permanente avec le premier engrenage (22) ; le deuxième synchroniseur (21) est adapté pour engager le premier engrenage (22) de l'arbre (17) de la machine électrique réversible (14).

9. Transmission servo-assistée (1) selon la revendication 6, 7 ou 8, dans laquelle le dispositif de connexion (18) comprend une transmission directe (20) agencée entre l'arbre (17) de la machine électrique réversible (14) et l'arbre primaire (5).

10. Transmission servo-assistée (1) selon la revendication 9, dans laquelle la transmission directe (20) comprend un élément de connexion (24) calé sur l'arbre primaire (5) ; le deuxième synchroniseur (21) est adapté pour engager l'élément de connexion (24) avec l'arbre (17) de la machine électrique réversible (14).

11. Transmission servo-assistée (1) selon la revendication 6, 7 ou 8, dans laquelle le dispositif de connexion (18) comprend une autre transmission à engrenage agencée entre l'arbre (17) de la machine électrique réversible (14) et l'arbre primaire (5).

12. Transmission servo-assistée (1) selon l'une quelconque des revendications 1 à 5, dans laquelle le dispositif de connexion (18) comprend une paire d'autres embrayages, qui sont agencés respectivement entre l'arbre (17) de la machine électrique réversible (14) et l'arbre primaire (5) et l'arbre secondaire (7).
